# EUROPÄISCHE PATENTSCHRIFT

(11) **EP 3 523 147 B1**
(45) Veröffentlichungstag und Bekanntmachung des Hinweises auf die Patenterteilung: **20.01.2021**
(21) Anmeldenummer: 17778298.4
(22) Anmeldetag: 04.10.2017
(51) Int. Cl.: B60D 1/06, B60D 1/54, B60D 1/62

(54) **ANHÄNGEKUPPLUNG MIT EINER ANSCHLUSSVORRICHTUNG**
TRAILER HITCH WITH CONTACT UNIT
ATTELAGE AVEC DISPOSITIF DE CONNEXION

(30) Priorität: 07.10.2016 DE 102016119153; 12.10.2016 DE 102016119393
(43) Veröffentlichungstag der Anmeldung: 14.08.2019
(73) Patentinhaber: WESTFALIA - Automotive GmbH, 33378 Rheda-Wiedenbrück (DE)
(72) Erfinder: BRUMMEL, Christian, 33332 Gütersloh (DE)
(74) Vertreter: Patentanwälte Bregenzer und Reule Partnerschaftsgesellschaft mbB
(86) Internationale Anmeldenummer: PCT/EP2017/075225
(87) Internationale Veröffentlichungsnummer: WO 2018/065469

(56) Entgegenhaltungen:
- EP-A1- 3 034 335
- DE-A1-102012 005 791
- DE-U1- 29 825 216

## Beschreibung

Die Erfindung betrifft eine Anhängekupplung mit einer an einem Kraftfahrzeug befestigten oder befestigbaren Trägeranordnung, an welcher ein Lager angeordnet ist, wobei an dem Lager ein Kupplungselement, insbesondere ein Kupplungsarm, anhand einer Verstellbewegung zwischen einer zum Ankuppeln eines Anhängers oder Lastenträgers an das Kupplungselement geeigneten Gebrauchsstellung, in welcher das Kupplungselement im am Kraftfahrzeug montierten Zustand der Anhängekupplung nach hinten vor das Kraftfahrzeug vorsteht, und einer Nichtgebrauchstellung verstellbar ist, in welcher das Kupplungselement vorteilhaft hinter einen Stoßfänger des Kraftfahrzeugs zurück verstellt ist, wobei an dem Kupplungselement eine Anschlussvorrichtung zur Verbindung eines Bordnetzes des Anhängers oder Lastenträgers mit einem Bordnetz des Kraftfahrzeugs angeordnet ist, wobei die Anschlussvorrichtung anhand einer Leitung mit dem Bordnetz des Kraftfahrzeugs verbunden oder verbindbar ist, welche einen flexiblen Leitungsabschnitt aufweist, der an einem ersten Längsendbereich ortsfest bezüglich der Trägeranordnung und an einem zweiten Längsendbereich ortsfest am Kupplungselement festgelegt ist und die Bewegung des Kupplungselements zwischen der Gebrauchsstellung und der Nichtgebrauchstellung mitmacht.

Eine derartige Anhängekupplung ist beispielsweise in EP 2 871 081 A2 erkennbar. An dem Kupplungselement in Gestalt eines Kupplungsarms der Anhängekupplung ist eine Halterung für eine Anhängersteckdose, mithin also eine Anschlussvorrichtung, dargestellt. Die Anhängersteckdose ist über ein in den Zeichnungen nicht dargestellte flexiblen Leitung an das Bordnetz des Kraftfahrzeugs angeschlossen.

Problematisch an der Leitungsführung der flexiblen Leitung ist häufig, dass diese bei der Schwenkbewegung des Kupplungsarms zwischen der Gebrauchsstellung und der Nichtgebrauchstellung in eine nicht beabsichtigte Form verformt wird, beispielsweise eingeklemmt wird oder in sonstiger Weise beschädigt wird.

Eine weitere Anhängekupplung ist in EP 3 034 335 A1 offenbart.

Es ist daher die Aufgabe der vorliegenden Erfindung, eine Anhängekupplung mit einer verbesserten Leitungsführung einer Leitung für eine an einem Kupplungselement angeordnete Anschlussvorrichtung bereitzustellen.

Zur Lösung der Aufgabe ist bei einer Anhängekupplung der eingangs genannten Art vorgesehen, dass sie eine Wicklungseinrichtung zum Aufwickeln eines Wickelabschnitts des Leitungsabschnitts auf einen Leitungswickel bei der Verstellung des Kupplungselements zwischen der Gebrauchsstellung und der Nichtgebrauchstellung aufweist.

Es ist dabei ein Grundgedanke, dass der Leitungsabschnitt zwischen beispielsweise der Trägeranordnung oder einem Auslass am Kraftfahrzeug und der Anschlussvorrichtung am Kupplungsarm gezielt aufgewickelt und abgewickelt wird. Es kann vorgesehen sein, dass der erste Längsendbereich ortsfest beispielsweise an einem Querträger oder einem sonstigen Bauteil der Trägeranordnung festgelegt ist. Es ist auch möglich, dass der erste Längsendbereich des flexiblen Leitungsabschnitts an einer Karosserie oder einem sonstigen Bauteil des Kraftfahrzeugs ortsfest festgelegt ist beispielsweise an einem Durchlass oder Auslass, der eine Leitungsführung der Leitung zwischen einem Innenraum des Kraftfahrzeugs und dem Außenbereich, wo die Anhängekupplung angeordnet ist, ermöglicht.

Die Leitung kann beispielsweise einen oder mehrere elektrische und oder eine oder mehrere optische Leitungen umfassen. Die Anschlussvorrichtung ist vorzugsweise als eine Anschlusssteckdose oder Anhängersteckdose ausgestaltet. Es ist vorteilhaft, wenn die Anschlussvorrichtung mindestens einen elektrischen Steckkontakt oder mindestens einen optischen Kontakt, insbesondere Steckkontakt, aufweist.

Der Leitungsabschnitt kann zwar über einen Teilbereich im Raum verlaufen, ist jedoch an einem anderen Teilbereich, nämlich im Bereich des Wickelabschnitts, so sorgfältig geführt, dass Beschädigungen vermieden werden. Der auf den Leitungswickel aufgewickelte Wickelabschnitt steht nicht frei im Raum, sondern ist auf den örtlich definiert angeordneten Leitungswickel aufgewickelt. Der Leitungswickel selbst ist vorzugsweise auf einen Wicklungskörper aufgewickelt, kann aber auch ein freistehender oder abschnittsweise freistehender Leitungswickel sein.

Grundsätzlich möglich ist es, dass die Wickeleinrichtung den Leitungswickel beim Verstellen des Kupplungsarms aus der Gebrauchsstellung in die Nichtgebrauchsstellung aufwickelt und in Gegenrichtung abwickelt. Es ist aber auch möglich, dass die Wickeleinrichtung den Leitungswickel beim Verstellen des Kupplungsarms aus der Nichtgebrauchstellung in die Gebrauchsstellung aufwickelt und entgegengesetzt, also von der Gebrauchsstellung in die Nichtgebrauchsstellung, abwickelt. Die Wicklungseinrichtung verkürzt also die Länge des flexiblen Leitungsabschnitts in Abhängigkeit davon, in welcher von beiden Stellungen, der Gebrauchsstellung und der Nichtgebrauchstellung, ein kleiner Abstand zwischen dem Kupplungsarm bzw. dem Befestigungsort des Leitungsabschnitts am Kupplungsarm und dem Befestigungsort, der ortsfest bezüglich der Trägeranordnung ist, ist.

Ein vorteilhaftes Konzept sieht vor, dass die Wicklungseinrichtung an dem Kupplungselement angeordnet ist. Somit gibt beispielsweise das Kupplungselement die Wickelbewegung zum Aufwickeln oder Abwickeln des Leitungswickels vor. Es ist aber auch möglich, dass die Wicklungseinrichtung relativ zum Kupplungselement drehbar ist, um den Leitungswickel aufzuwickeln oder abzuwickeln.

Ein bevorzugtes Konzept ist weiterhin, wenn die Wicklungseinrichtung mit dem Kupplungselement fest verbunden oder bewegungsgekoppelt ist, so dass die Wicklungseinrichtung bei der Verstellbewegung zwischen der Gebrauchsstellung und der Nichtgebrauchstellung zum Aufwickeln und Abwickeln des Leitungswickels angetrieben, beispielsweise drehangetrieben ist. Mithin kann also das Kupplungselement die Wicklungseinrichtung, beispielsweise den später noch erläuterten Wickelkörper, bei der Verstellung zwischen der Gebrauchsstellung und der Nichtgebrauchstellung mitnehmen.

Eine Bewegungskoppelung zwischen der Wicklungseinrichtung und dem Kupplungselement kann beispielsweise anhand eines Übertragungsgetriebes, zum Beispiel eines Zahnradgetriebes, Seilgetriebes oder dergleichen, vorgesehen sein.

Es ist weiterhin möglich, dass ein Antrieb zum Antreiben des Kupplungsarms einen Abtrieb einerseits für das Kupplungselement und andererseits für die Wicklungseinrichtung aufweist, beispielsweise einen Dreh-Abtrieb

Ein zweckmäßiges Konzept sieht vor, dass die Wicklungseinrichtung einen Wickelkörper zum Aufwickeln des Leitungsabschnitts aufweist, auf den der Leitungsabschnitt zumindest teilweise aufwickelbar ist.

Es ist weiterhin möglich, dass der Wickelabschnitt den Leitungswickel zumindest abschnittsweise freistehend ohne Abstützung an einem Wickelkörper ausbildet. Der Leitungswickel kann also beispielsweise in der Art einer freistehenden Spirale oder Teil-Spirale ausgebildet sein. Ohne weiteres sind Kombinationen dieser Maßnahme mit der vorherigen Maßnahme möglich, d. h. dass beispielsweise ein Teilbereich des Wickelabschnitts auf den Wickelkörper aufwickelbar ist, und ein anderer Teilabschnitt des Wickelabschnitts den Leitungswickel freistehend, ohne Abstützung auf dem Wickelkörper, ausbildet.

Der Wickelkörper kann beispielsweise eine Trommel aufweisen oder durch eine Trommel gebildet sein. Die Trommel ist beispielsweise zylindrisch. Der Wickelkörper kann aber auch mindestens einen konischen oder schrägen Abschnitt aufweisen. Ein derartiger Abschnitt kann beispielsweise das Aufwickeln einzelner Wicklungen des Leitungswickels nebeneinander erleichtern.

Der Wickelkörper kann in einem Winkelabstand zueinander angeordnete Stützkonturen, beispielsweise Stützrippen, zum Stützen des Leitungswickels aufweisen. Somit liegt der Leitungswickel nicht unmittelbar an einem Außenumfang des Wickelkörpers an, sondern ist an einzelnen Stützrippen oder sonstigen Stützkonturen abgestützt. Dies kann insbesondere das Aufwickeln und/oder das Abwickeln des Leitungswickels erleichtern.

Das Kupplungselement ist zweckmäßigerweise um mindestens eine Schwenkachse zwischen der Gebrauchsstellung und der Nichtgebrauchsstellung schwenkbar gelagert. Das eingangs genannte Lager, das an der Trägeranordnung angeordnet ist, ist also in diesem Fall ein Schwenklager. Ohne weiteres sind aber auch mehrachsige Schwenkbewegungen möglich, d. h. dass das Kupplungselement um mindestens zwei Achsen schwenkbar zwischen der Gebrauchsstellung und der Nichtgebrauchstellung gelagert ist. Zweckmäßig ist es aber auch, wenn das Kupplungselement anhand eines Schiebelagers oder linear verschieblich bezüglich der Trägeranordnung gelagert ist. So kann beispielsweise der Kupplungsarm bezüglich der zum Kraftfahrzeug oder zur Trägeranordnung ortsfesten Befestigungsstelle des flexiblen Leitungsabschnitts linear verschieblich gelagert sein. Ohne weiteres sind aber auch Kombinationen möglich, d. h. eine Schwenk-Schiebe-Lagerung des Kupplungsarms bezüglich der Trägeranordnung.

Die Wicklungseinrichtung, beispielsweise der Wickelkörper, ist zweckmäßigerweise um die mindestens eine Schwenkachse des Kupplungselements zum Aufwickeln und zum Abwickeln des Leitungswickels drehbar gelagert. Insbesondere dann, wenn der Kupplungsarm oder das sonstige Kupplungselement zwischen der Gebrauchsstellung und der Nichtgebrauchstellung dreht, kann sie auf diesem Wege die Wicklungseinrichtung, beispielsweise den Wickelkörper, mitnehmen.

Es ist auch möglich, dass die Wicklungseinrichtung, beispielsweise der Wickelkörper, an einem an dem Lager schwenkbar gelagerten Schwenklagerabschnitt, beispielsweise einem Lagerkopf, des Kupplungselements angeordnet ist. Der Wickelkörper kann beispielsweise stirnseitig angeordnet sein. Der Wickelkörper kann beispielsweise ein separates, am Schwenklagerabschnitt insbesondere ortsfest und/oder drehfest angeordnetes Bauteil sein. Es ist aber auch möglich, dass der Wickelkörper vom Schwenklagerabschnitt gebildet ist oder sozusagen einen Bestandteil des Schwenklagerabschnitts bildet.

Der zweite Längsendbereich des Leitungsabschnitts verläuft zweckmäßigerweise in einem Bogen oder bogenförmig mit einem Krümmungssinn entsprechend der Krümmung des Leitungswickels am Kupplungselement. Der zweite Leitungsabschnitt ist beispielsweise am Kupplungselement entsprechend dieser Krümmung festgelegt. Mithin ist also die Krümmung des Leitungsabschnitts am Kupplungselement dieselbe wie in einem Übergangsbereich des Leitungswickels zum Kupplungselement. Die Krümmung ist also vorzugsweise stetig.

Eine Befestigung der Leitung am Kupplungselement, Wicklungskörper, an der Trägeranordnung oder am Kraftfahrzeug kann beispielsweise mittels einer die Leitung im Klemmsitz haltenden Aufnahme, einer Kabelschelle, eines Kabelbinders oder dergleichen erfolgen.

Vorzugsweise gibt eine Befestigung des Leitungsabschnitts am Kupplungselement schon die Richtung des herzustellenden Leitungswickels vor.

Eine Ausführungsform sieht vor, dass der zweite Längsendbereich an einem Befestigungsort oder einzigen Befestigungsort an dem Kupplungselement und/oder einem den Leitungswickel zumindest abschnittsweise stützenden Wickelkörper festgelegt ist. Somit kann beispielsweise eine Drehung des Wickelkörpers oder des Kupplungselements zum Aufwickeln des Leitungswickels oder zum Abwickeln des Leitungswickels dienen.

An dieser Stelle sei bemerkt, dass der zweite Längsendbereich oder Wicklungsabschnitt oder beide ohne weiteres auch reibschlüssig an dem Wickelkörper oder dem Kupplungselement anliegen können, beispielsweise anhand einer oder mehrerer Wicklungen, sodass ein Drehmoment des Kupplungselements oder Wickelkörpers dazu genutzt werden kann, den Leitungsabschnitt vom Leitungswickel abzuwickeln oder auf den Leitungswickel aufzuwickeln.

Der zweite Längsendbereich ist vorzugsweise an mindestens zwei Befestigungsorten oder Befestigungsanordnungen, die einen Längsabstand und/oder einen Winkelabstand zueinander haben, an dem Kupplungselement und/oder einem den Leitungswickel zumindest abschnittsweise stützenden Wickelkörper, beispielsweise der eingangs genannten Trommel, ortsfest festgelegt. Diese Maßnahme kann beispielsweise dazu beitragen, dass der Wickelabschnitt oder Leitungsabschnitt schon eine Krümmung entsprechend dem Leitungswickel aufweist bzw. in dieser Krümmung am Wickelkörper oder Kupplungselement festgelegt ist.

Ein zweckmäßiges Konzept sieht vor, dass die Leitung zwischen dem zweiten Längsendbereich des aufwickelbaren Leitungsabschnitts und der Anschlussvorrichtung ortsfest an dem Kupplungselement festgelegt ist. Mithin verläuft also die Leitung am Kupplungselement oder Kupplungsarm nicht frei oder beweglich, sondern ist am Kupplungselement so fixiert, dass eine Beschädigung des Leitungsabschnitts entlang des Kupplungselements zur Anschlussvorrichtung hin vermeidbar ist. Die Fixierung erfolgt beispielsweise anhand einer Verklebung, mittels Kabelschellen, Klemmen oder dergleichen.

Vorteilhaft ist es beispielsweise, wenn die Leitung an dem Kupplungselement eng anliegend verläuft. Beispielweise können dort eine oder mehrere Kabelschellen oder sonstige Befestigungsmittel zur Befestigung der Leitung vorgesehen sein.

Es ist weiterhin vorteilhaft, wenn am Kupplungselement, beispielweise am Kupplungsarm, ein Aufnahmekanal vorgesehen ist, an oder in welchem zumindest ein Teilabschnitt der Leitung zwischen dem zweiten Längsendbereich des aufwickelbaren Leitungsabschnitts und der Anschlussvorrichtung verläuft. Beispielsweise kann der Aufnahmekanal eine Röhre oder eine Nut umfassen.

Bevorzugt ist es, wenn der Leitungsabschnitt zwischen dem Leitungswickel und der Trägeranordnung oder dem Kupplungselement in der Gebrauchsstellung und der Nichtgebrauchstellung im Wesentlichen dieselbe Längslänge und/oder denselben geometrischen Verlauf und/oder eine Schleifenform aufweist. Somit verändert sich der Verlauf der Leitung zwischen dem Leitungswickel und der sozusagen nächsten ortsfesten Anbindung, nämlich beispielsweise dem Kupplungselement oder der Trägeranordnung, auch bei der Bewegung des Kupplungselements zwischen der Gebrauchsstellung und der Nichtgebrauchstellung nicht. Geringfügige Veränderungen sind aber ohne weiteres möglich, da ja der Leitungsabschnitt flexibel ist. Die sozusagen größte geometrische Veränderung erfährt der Leitungsabschnitt jedoch im Bereich des Leitungswickels, wobei er dort eben gezielt geführt ist und somit beispielsweise ein Abknicken, Einklemmen oder dergleichen vermeidbar ist. Die Schleifenform kann beispielsweise einen oder mehrere Krümmungsabschnitte umfassen. Die Schleife muss allerdings nicht geschlossen sein, sondern kann einen sozusagen offenen, schleifenförmigen Verlauf darstellen.

Es sei erwähnt, dass die Wicklungseinrichtung, insbesondere der Wickelkörper, auch an der Trägeranordnung angeordnet sein kann. Beispielsweise kann der Wickelkörper drehbar an einem Querträger oder einem sonstigen Bauteil der Trägeranordnung gelagert sein.

Die Wicklungseinrichtung weist zweckmäßigerweise mindestens einen an dem Leitungsabschnitt angeordneten und sich entlang des Leitungsabschnitt erstreckenden Formkörper auf, welcher den Leitungsabschnitt beispielsweise in einen den Leitungswickel ausbildenden Wickelzustand oder in einen den Leitungsabschnitt in einen von dem Leitungswickel abgewickelten und den Leitungsabschnitt erstreckenden Abwickelzustand beaufschlagt. Der Formkörper kann beispielsweise dazu beitragen oder dienen, dass ein freistehender Leitungswickel gebildet werden kann. Es ist aber auch möglich, dass der Formkörper die Leitung bzw. den Leitungsabschnitt sozusagen aussteift oder streckt, sodass der Leitungsabschnitt nach dem Abwickeln vom Leitungswickel eine langgestreckte Form einnimmt.

Der Formkörper kann beispielsweise einen einzelnen Leiter des Leitungsabschnitts umhüllenden Mantel umfassen oder dadurch gebildet sein. Beispielsweise kann ein entsprechend steifes Mantelmaterial vorgesehen sein, welches an sich dazu neigt, den Leitungsabschnitt in eine langgestreckte Form zu bringen. Das Mantelmaterial kann aber auch vorgeformt sein, um den Leitungswickel bzw. die bogenförmige Form des Leitungsabschnitts auf dem Leitungswickel vorzugeben.

Weiterhin ist es möglich, dass der Formkörper eine Wölbung aufweist, die quer zur Längserstreckung des Leitungsabschnitts verläuft und ihren Krümmungsradius beim Strecken oder beim Aufwickeln des Leitungsabschnitts verändert. Beispielsweise kann es sich bei einem derartigen Formkörper um ein sogenanntes Spreizband handeln.

Zweckmäßigerweise ist vorgesehen, dass der Leitungswickel seine aufgewickelte Position ohne Krafteinwirkung oder mit einer Krafteinwirkung beibehält, die geringer als eine zum Aufwickeln des Leitungswickels ist. Der Leitungswickel neigt vorzugsweise selbsttätig dazu, sich sozusagen aufzuwickeln. Dies kann beispielsweise anhand des vorgenannten Formkörpers erreicht werden. Der Mantel kann beispielsweise grundsätzlich eine gekrümmte, den Leitungswickel ausbildende Form haben, sodass er beim Abwickeln des Leitungswickels gestreckt wird, jedoch durch das Abwickeln eine zum Aufwickeln des Leitungswickels geeignete Kraft oder in diese Richtung wirkende Kraft entwickelt.

Ein vorteilhaftes Konzept sieht vor, dass die Wicklungseinrichtung im Sinne eines Aufwickelns oder im Sinne eines Abwickelns oder beides des Leitungsabschnitts durch einen Antrieb angetrieben ist. Der Antrieb kann beispielsweise ein motorischer Antrieb oder ein Federantrieb sein. Der Federantrieb kann beispielsweise eine Spiralfeder umfassen.

Bevorzugt wird der Antrieb zum Antreiben des Kupplungselements dazu genutzt, auch die Wicklungseinrichtung anzutreiben. Der Antrieb kann aber auch durch das Kupplungselement selbst gebildet sein, welches die Wicklungseinrichtung sozusagen antreibt, wenn es zwischen der Gebrauchsstellung und der Nichtgebrauchstellung angetrieben wird. Dazu kann beispielsweise die eingangs genannte Bewegungskopplung zwischen Kupplungselement und Wicklungseinrichtung vorgesehen sein.

Zweckmäßigerweise ist vorgesehen, dass der Leitungswickel im aufgewickelten Zustand mindestens eine halbe, bevorzugt eine dreiviertel Wicklung ausbildet. Zweckmäßigerweise ist sogar eine ganze Wicklung vorgesehen, d. h. dass ein Leitungswickel mit mindestens einer kompletten Wicklung ausgebildet ist, wenn der Leitungswickel aufgewickelt ist. Ohne weiteres können aber auch weitere Wicklungen vorgesehen sein.

Im aufgewickelten Zustand des Leitungsabschnitts kreuzen sich zweckmäßigerweise mindestens zwei einen Längsabstand zueinander aufweisende Teilabschnitte des Leitungsabschnitts. Dies kann beispielsweise aufgrund der vorgenannten mindestens einen Wicklung der Fall sein. Es ist auch möglich, dass im aufgewickelten Zustand des Leitungsabschnitts diese Teilabschnitte nebeneinander angeordnet sind und/oder aneinander anliegen.

Es ist möglich, dass die Wicklungseinrichtung, beispielsweise der Leitungswickel, im Sinne einer Bremse und/oder eines Antriebs beim Verstellen des Kupplungselements zwischen der Gebrauchsstellung und der Nichtgebrauchstellung wirkt.

Wenn also beispielsweise der Leitungswickel eine gewisse Formsteifigkeit aufweist, wirkt er im Sinne eines Antriebs oder einer Bremse oder beides, wenn der Leitungswickel aufgewickelt oder abgewickelt wird. Wenn die Formsteifigkeit des Leitungsabschnitts oder Wicklungsabschnitts zum Beispiel im Sinne eines Abwickelns oder Streckens des Leitungsabschnitts oder Wicklungsabschnitts ausgestaltet ist, neigt der Leitungswickel dazu, sich abzuwickeln. Wenn der abgewickelte Zustand des Leitungswickels mit der Gebrauchsstellung des Kupplungsarms korreliert, wirkt die Formsteifigkeit des Leitungsabschnitt beispielsweise in Richtung der Gebrauchsstellung, d. h. in Richtung der Gebrauchsstellung wirkt der Leitungswickel oder die Wicklungseinrichtung als Antrieb, in Richtung der Nichtgebrauchstellung als Bremse. Wenn der Leitungswickel oder Wicklungsabschnitt eine Formsteifigkeit, zum Beispiel anhand des bereits erwähnten Formkörpers, einer Feder oder dergleichen, in Richtung eines Aufwickelns des Leitungsabschnitts zu dem Leitungswickel hat, und der aufgewickelte Zustand des Leitungsabschnitts mit der Nichtgebrauchstellung korreliert, wirkt der Leitungswickel bzw. die Wicklungseinrichtung beispielsweise als Bremse, wenn er abgewickelt wird, d. h. in Richtung der Gebrauchsstellung. Er kann in Richtung der Nichtgebrauchstellung als Antrieb wirken.

Weiterhin kann ein Antrieb oder eine Bremse der Wicklungseinrichtung gleichzeitig als ein Antrieb oder als eine für den Kupplungsarm bzw. das Kupplungselement wirken. Wenn also beispielsweise eine Feder den Wicklungskörper zum Aufwickeln des Leitungswickels antreibt, muss diese beim Abwickeln des Leitungswickels gespannt werden, wird also im Sinne einer Bremse. Wenn der Wicklungskörper mit dem Kupplungselement drehgekoppelt ist, überträgt er die entsprechende Bremskraft oder Antriebskraft seines Antriebs auf das Kupplungselement.

Das Kupplungselement umfasst beispielsweise einen Kupplungsarm. Am Kupplungselement ist zweckmäßigerweise ein Kuppelstück, insbesondere eine Kupplungskugel, zum Ankuppeln des Anhängers und/oder Lastenträgers vorgesehen. Beispielweise kann eine sogenannte Zugkugelkupplung an eine Kupplungskugel zur Bildung eines Drehgelenks angekuppelt werden. Ein Lastenträger ist in der Regel an das Kuppelstück angeklemmt. Es sind aber auch Steckverbindungen zwischen dem Kupplungselement und beispielsweise dem Lastenträger möglich, wobei beispielsweise am Kupplungselement eine Steckaufnahme oder ein Steckvorsprung zum Anstecken des Lastenträgers vorgesehen ist.

Nachfolgend werden Ausführungsbeispiele der Erfindung anhand der Zeichnung erläutert. Es zeigen:
- Figur 1: eine Frontalansicht von hinten auf ein Kraftfahrzeug mit einer Anhängekupplung, deren Kupplungselement in der zum Ankuppeln eines Anhängers geeigneten Gebrauchsstellung steht,
- Figur 2: die Anhängekupplung gemäß Figur 1, wobei jedoch der Kupplungsarm schon minimal in Richtung einer in
- Figur 3: dargestellten Nichtgebrauchstellung verschwenkt ist,
- Figur 4: die Anhängekupplung gemäß Figur 3 in seitlich schräger Ansicht, und
- Figur 5: eine Anhängekupplung entsprechend der vorher beschriebenen Anhängekupplung, wobei jedoch eine Wicklungseinrichtung einen fahrzeugseitig drehbar gelagerten Wickelkörper umfasst.

Bei den in der Zeichnung dargestellten Anhängekupplungen 10, 110 sind teilweise gleiche oder gleich wirkende Komponenten vorgesehen, so dass insoweit gleiche oder ähnliche Bezugszeichen verwendet werden. Zur Veranschaulichung von Unterschieden zwischen den Ausführungsbeispielen 10, 110 sind in der Regel um 100 verschiedenen Bezugsziffern verwendet.

Die Anhängekupplung 10 umfasst eine Trägeranordnung 11 mit einem Querträger 12, der beispielsweise quer am Heck eines Kraftfahrzeugs 90 verläuft. Der Querträger 12 ist beispielsweise durch Seitenträger an einer Karosserie 91 des Kraftfahrzeugs 90 festgelegt. Die Seitenträger (nicht dargestellt) sind beispielsweise mit der Karosserie 91 verschraubt. Die Seitenträger können sich seitlich in Fahrtrichtung längs des Kraftfahrzeugs 90 an der Karosserie außenseitig erstrecken oder auch heckseitig angeordnet sein.

Die Trägeranordnung 12 ist also mit der Karosserie 91 des Kraftfahrzeugs 90 verbunden.

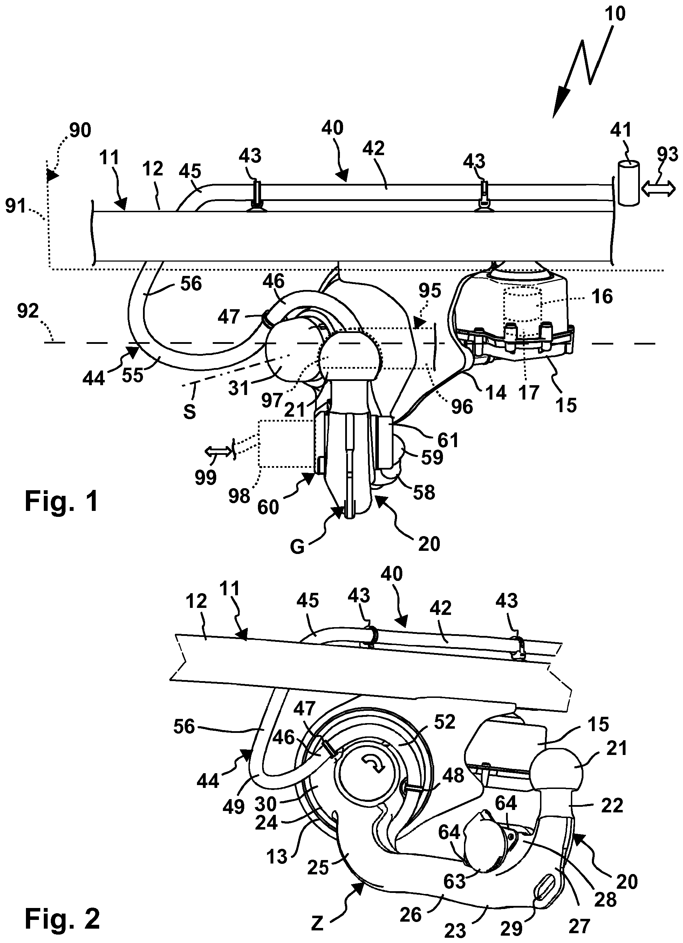

Die Trägeranordnung 12 ist zwischen der Karosserie 91 und einem Stoßfänger 92 des Kraftfahrzeugs 90 angeordnet. In der in Figur 1 dargestellten Gebrauchsstellung G steht ein Kupplungselement 20 nach hinten vor das Heck oder den Stoßfänger 92 des Kraftfahrzeugs 90 vor, so dass ein Anhänger 95 oder Lastenträger 195 an das Kupplungselement 20 ankuppelbar ist.

Der Anhänger 95 umfasst beispielsweise eine Deichsel 96, an deren freiem Endbereich eine Zugkugelkupplung 97 angeordnet ist. Die Zugkugelkupplung 97 ist drehbar an einem Kuppelstück 21 des Kupplungselementes 20 gelagert, beispielsweise an einer Kupplungskugel.

Der Lastenträger 195 kann beispielsweise mit einer Kupplung 197 insbesondere einer Klemm-Kupplung oder einer Steckkupplung, mit dem Kuppelstück 21 verbunden werden. Die Kupplung 197 ist beispielsweise an einem Gestell 196 des Lastenträgers 195 angeordnet.

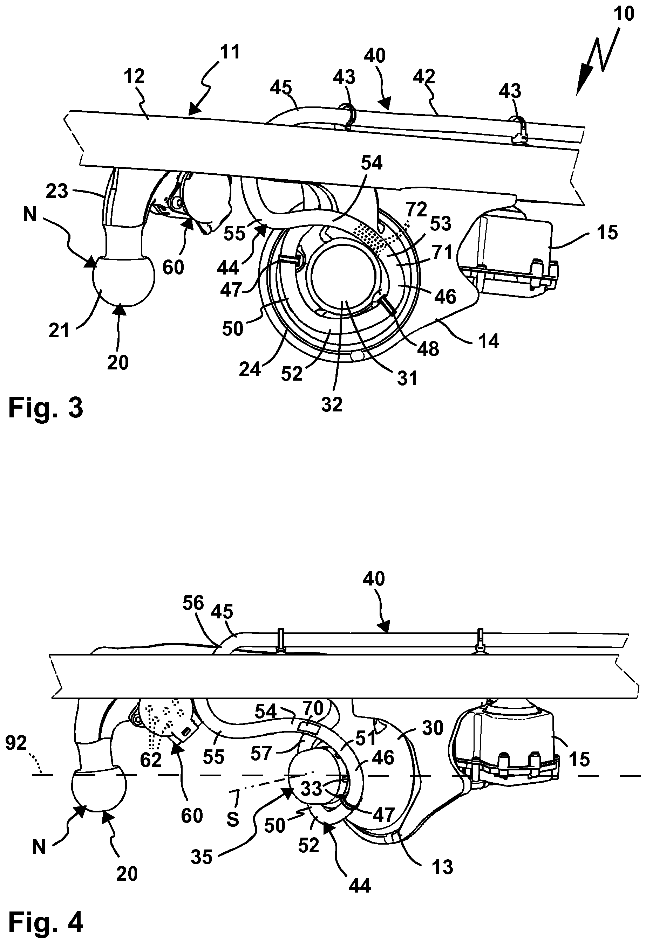

Das Kupplungsstück 21 ist an einem freien Endbereich 22 eines Kupplungsarmes 23 angeordnet. Ein Schwenklagerabschnitt 24 des Kupplungsarmes 23 ist an einem Lager 13, insbesondere einem Schwenklager, schwenkbar zwischen der Gebrauchsstellung G und einer Nichtgebrauchstellung N gemäß Figuren 3, 4 gelagert. In der Nichtgebrauchstellung N ist das Kupplungsstück 21 vorzugsweise hinter den Stoßfänger 92 und/oder den Querträger 12 verstellt, jedenfalls nicht zum Ankuppeln des Anhängers 95 oder des Lastenträgers 195 geeignet. In der Regel ist das Kupplungselement 20 in der Nichtgebrauchstellung N nicht oder nur eingeschränkt sichtbar durch einen Bediener, was ästhetisch ansprechend ist. Allerdings ist durch diese Kinematik die Leitungsführung einer Leitung 40, die sich zwischen dem Bordnetz 93 und einer Anschlussvorrichtung 60 erstreckt und eine elektrische und/oder optische Verbindung zwischen dem Bordnetz 93 des Kraftfahrzeugs 90 und einem Bordnetz 99 des Anhängers 95 oder Bordnetz 199 des Lastenträgers 195 ermöglicht, erschwert.

Die Anschlussvorrichtung 60, beispielsweise eine sogenannte Anhängersteckdose, ist nämlich am Kupplungsarm 23 befestigt, so dass sie dessen Schwenkbewegung um eine Schwenkachse S zwischen der Gebrauchsstellung G und der Nichtgebrauchstellung N mitmacht. In der Gebrauchsstellung G ist die Anschlussvorrichtung 60 bequem zugänglich, während sie in der Nichtgebrauchstellung N zusammen mit dem Kupplungselement 20 ganz oder im Wesentlichen hinter dem Stoßfänger 92 verborgen ist.

Das Kupplungselement 20 weist einen Krümmungsabschnitt 25, der sich vom Schwenklagerabschnitt 24 weg erstreckt, einen im Wesentlichen gerade verlaufenden Abschnitt 26 sowie einen weiteren Krümmungsabschnitt 27 zwischen dem Abschnitt 26 und dem freien Endbereich 22 auf. An dem Krümmungsabschnitt 27 ist innenseitig eine Halterung 28, beispielsweise Halteböcke umfassend, für die Anschlussvorrichtung 60 vorgesehen. Außenseitig am Krümmungsabschnitt 27 befindet sich vorteilhaft eine Öse 29 zum Einhängen eines Abreißseils.

Mithin ist also die Anschlussvorrichtung 60 sozusagen geschützt im Innenbogen des Krümmungsabschnittes 27 angeordnet. Dadurch ist beispielsweise ein Gehäuse 61, welches in der Halterung 28 z.B. anhand von Haltevorsprüngen 64 gehalten ist, geschützt. In dem Gehäuse 61 sind beispielsweise Steckkontakte 62 der Anschlussvorrichtung 60 vorhanden, die mit einzelnen in der Zeichnung nicht dargestellten Leitern der Leitung 40, beispielsweise Leitern zur Versorgung von Leuchten des Anhängers 96, verbunden sind. Die Steckkontakte 62 sind durch einen Deckel 63 in an sich bekannter Weise schützbar. Der Deckel 63 ist am Gehäuse 61 der Anschlussvorrichtung 60 beispielsweise schwenkbar gelagert. Bei geöffnetem Deckel 63 kann eine Anschlussvorrichtung 98, 198 des Anhängers 95 oder des Lastenträgers 195, beispielsweise ein Anhängerstecker, mit der Anschlussvorrichtung 60, der bereits erläuterten Anhängersteckdose verbunden werden, so dass ein mit der Anschlussvorrichtung 98 verbundenes Bordnetz 99 des Anhängers 95 mit dem Bordnetz 93 über die Anschlussvorrichtung 60 verbunden ist.

Die Leitung 40 führt beispielsweise zu einem Steuergerät oder Anschlussgerät 41 zum Ansteuern des Bordnetzes 99, so dass beispielsweise Heckleuchten des Anhängers 95, Blinker oder dergleichen, ansteuerbar sind.

Das Lager 13 ist an einem Halter 14 vorgesehen, der beispielsweise vom Querträger 12 absteht, insbesondere nach unten absteht. An dem Halter 14 ist in nicht dargestellter Weise eine Lagerachse schwenkbar gelagert oder steht eine Lagerachse zum Schwenklagerabschnitt 24 des Kupplungselementes 20 vor. Mithin ist also der Schwenklagerabschnitt 24 am Halter 14 um die Schwenkachse S schwenkbar gelagert. Der Schwenklagerabschnitt 24 weist beispielsweise einen Lagerkopf 30 auf, in den eine Lagerwelle, die vom Halter 14 absteht, eingreift. Eine freie Stirnseite des Lagerkopfes 30 ist durch einen Abdeckkörper 31 abgedeckt. Der Abdeckkörper 31 bildet wie nachfolgend noch erläutert wird, einen Wickelkörper 32 für die Leitung 40.

Die Leitung 40 weist einen Leitungsabschnitt 42 auf, der mit dem Anschlussgerät oder Steuergerät 41 verbunden ist. Der Abschnitt 42 erstreckt sich beispielsweise entlang des Querträgers 12. Der Abschnitt 42 ist beispielsweise mit Befestigungsmitteln 43, insbesondere Kabelschellen, Kabelbindern oder dergleichen, am Querträger 12 festgelegt. Die Befestigungsmittel 43 sorgen also für eine ortsfeste Anbindung des Leitungsabschnittes 42 am Querträger 12. Der Leitungsabschnitt 42 kann eine flexible Leitung sein oder auch eine nicht flexible oder starre Leitung umfassen. Beispielsweise kann die Leitung 40 im Bereich des Querträgers 12 in einem Aufnahmerohr oder Kabelkanal geführt sein.

Der Leitungsabschnitt 42 geht in einen Leitungsabschnitt 44 über, der flexibel ist, so dass er die Bewegungen des Kupplungselementes 20 zwischen der Nichtgebrauchstellung N und der Gebrauchsstellung G mitmacht. Der Leitungsabschnitt 44 weist einen ersten Längsendbereich 45 auf, der anhand des Befestigungsmittels 43 sozusagen ortsfest festgelegt ist. Der andere, zweite Längsendbereich 46 des Leitungsabschnittes 44 ist anhand von Befestigungsmitteln 47, 48 ortsfest bezüglich des Lagerkopfes 30 bzw. des Schwenklagerabschnittes 24 des Kupplungselementes 20 festgelegt. An dieser Stelle sei bemerkt, dass auch eines der Befestigungsmittel 47 oder 48 ausreichen kann, um den zweiten Längsendbereich 46 am Kupplungselement 20 zu befestigen.

Wenn also das Kupplungselement 20 um die Schwenkachse S schwenkt, nimmt es jedenfalls den zweiten Längsendbereich 46 mit, wobei dieser mit einem Wickelabschnitt 49 einen Leitungswickel 50 ausbildet.

Der Leitungswickel 50 erstreckt sich mit einem Abschnitt 52 bogenförmig um den Wickelkörper 32, mithin also den Abdeckkörper 31 und bildet einen Teil mindestens einer Wicklung 51 aus. Der Wickelkörper 32 bildet einen Bestandteil einer Wicklungseinrichtung 35.

Die Befestigungsmittel 47, 48 umfassen beispielsweise Kabelklemmen, Kabelschellen oder dergleichen, die am Schwenklagerabschnitt 24 bzw. Lagerkopf 30 in einem Winkelabstand zueinander angeordnet sind. Zwischen den Befestigungsmitteln 47, 48 verläuft der Leitungsabschnitt 52 mit einem gekrümmten Verlauf, der schon im Wesentlichen der Krümmung bzw. dem bogenförmigen Verlauf des Leitungswickels 50, insbesondere eines Abschnittes 53, der sich am zweiten Längsendbereich 46 ausbildet, wenn der Wickelabschnitt 49 zu dem Leitungswickel 50 gewickelt ist.

An den Abschnitt 53 schließt sich ein Abschnitt 54 des Leitungsabschnittes 44 bzw. des Leitungswickels 50 an, der einen Abschnitt 57 des Leitungsabschnittes 44 kreuzt, welcher sich ausgehend vom Befestigungsmittel 48 in Richtung des Krümmungsabschnittes 25 des Kupplungselementes 20 erstreckt.

Der noch zumindest teilweise einen Bestandteil des Leitungswickels 50 bildende Abschnitt 54 kann durch einen Formkörper 70, beispielsweise einen Mantel der Leitung 40, in welcher vorteilhaft einzelne Adern für die Steckkontakte 62 verlaufen, in eine vorbestimmte Krümmung oder eine ausgestreckte Position belastet sein. So kann z.B. vorgesehen sein, dass bei einer Zugentlastung des Abschnitts 54, wenn sich das Kupplungselement 20 in Richtung der Nichtgebrauchstellung N bewegt, der Abschnitt 54 einen gekrümmten Verlauf entsprechend dem bogenförmigen oder gekrümmten Verlauf des Leitungswickels 50 ausbildet.

Wenn der Formkörper 70 in Richtung eines gekrümmten Verlaufs des Abschnitts 54 vorgeformt ist, kann der Formkörper 70 oder der Leitungswickel 50 beispielsweise auch als ein Antrieb des Kupplungselements 20 in Richtung der Nichtgebrauchstellung N wirken oder in umgekehrter Richtung als eine Bremse bei der Verstellung des Kupplungselements 20 in Richtung der Gebrauchsstellung G.

Ohne weiteres möglich wäre auch, dass ein Mantel 71, der einzelne Adern oder Einzeladern 72 des Leitungsabschnitt 44 mantelt, einen bei Entlastung gekrümmten oder bei Entlastung geradlinigen Verlauf aufweist, insoweit auch als Formkörper im Sinne einer Ausbildung des Leitungswickels 50 bzw. einer Abwicklung des Leitungswickels 50 wirkt.

Ausgehend vom Abschnitt 57 verläuft entlang des geraden Abschnittes 26 des Kupplungselementes 20 ein Abschnitt 58 der Leitung 40, der schließlich über einen abgewinkelten Bereich bzw. Anschlussabschnitt 59 mit der Anschlussvorrichtung 60 verbunden ist. Der Anschlussabschnitt 59 führt in das Gehäuse 61 an der dem Deckel 63 entgegengesetzten Seite hinein. Der Abschnitt 58 ist eng entlang des geraden Abschnitts 26 geführt, beispielsweise an den Abschnitt 26 angeklebt, mit entsprechenden Kabelschellen, Kabelbindern oder dergleichen angebunden. Am Abschnitt 26 kann auch ein Kabelkanal oder eine Rinne zur Aufnahme des Abschnitts 58 der Leitung 40 vorgesehen sein.

Der Leitungswickel 50 umfasst also eine Wicklung 51, deren sozusagen eingangsseitiger Abschnitt 54 mit dem sozusagen ausgangsseitigen Abschnitt 57 der Leitung 40 kreuzt. Mithin ist also eine vollständige Wicklung 51 beim Leitungswickel 50 vorhanden, wenn das Kupplungselement 20 eine Endstellung einnimmt, hier beispielsweise die Nichtgebrauchstellung N.

An den Abschnitt 54 schließt sich ein Krümmungsabschnitt 55 an, der schleifenförmig oder eine Schleife 56 ausbildend bis zum ersten Längsendbereich 45 des Leitungsabschnittes 44 verläuft. Die Schleife 56 bleibt, wie man aus der Zeichnung erkennen kann, bei der Bewegung des Kupplungselementes 20 zwischen der Gebrauchsstellung G und der Nichtgebrauchstellung N im Wesentlichen unverändert, hat also denselben geometrischen Verlauf bzw. Längsverlauf. Die zur Bewegung des Kupplungselementes 20 bzw. der Anschlussvorrichtung 60 zwischen der Gebrauchsstellung G und der Nichtgebrauchstellung N erforderliche Bewegungsfreiheit wird durch das Aufwickeln des Wickelabschnittes 49 zum Leitungswickel 50 und das Abwickeln des Wickelabschnittes 49 vom Leitungswickel 50 erzielt.

Der Leitungswickel 50 kann im Wesentlichen freistehend sein, beispielsweise mit Abstand zum Wickelkörper 32. Es ist aber auch möglich, dass er beispielsweise an Stützkonturen 33 oder in sonstiger Weise am Außenumfang des Wickelkörpers 32 zu liegen kommt bzw. dort abgestützt ist. Der Abdeckkörper 31 bzw. Wickelkörper 32 hat eine im Wesentlichen zylindrische Form, so dass der Leitungswickel 50 an dessen zylindrischen Außenumfang zu liegen kommt. Dort sorgen die Stützkonturen 33, beispielsweise Stützrippen, für eine Abstützung.

Zur Betätigung bzw. Verstellung des Kupplungselementes 20 können verschiedene Methoden dienen. Beispielsweise ist eine manuelle Verstellung möglich, bei der der Bediener den Kupplungsarm 23 ergreift, um ihn zwischen der Gebrauchsstellung G und der Nichtgebrauchstellung N zu verstellen. Dies ist beispielsweise bei der Anhängekupplung 10 der Fall. Man erkennt, dass der Wickelkörper 32 dabei mitdreht, so dass er den Leitungswickel 50 aufwickelt bzw. abwickelt. Es ist auch möglich, dass der Wickelkörper 32 lediglich eine Wickelhilfe darstellt, d. h. dass der Wickelabschnitt 49 vom Wickelkörper 32 daran gehindert wird, eine andere Form als den Leitungswickel 50 einzunehmen.

An dieser Stelle sei erwähnt, dass sich der Leitungswickel 50 selbstverständlich auch am Lagerkopf 30 abstützen kann, so dass dieser einen Wickelkörper bildet.

Der Leitungswickel 50 verläuft um die Schwenkachse S herum.

Zur Drehbetätigung bzw. zum Drehantrieb des Kupplungselementes 20 zwischen der Gebrauchsstellung G und der Nichtgebrauchstellung N kann aber auch ein Antrieb 15 vorgesehen sein. Beispielsweise treibt ein fluidischer oder elektrischer Motor, ein Federantrieb oder ein Elektromotor 16 über ein Getriebe 17 den Kupplungsarm 23 zu der Schwenkbewegung um die Schwenkachse S an, wobei er gleichzeitig die Wicklungseinrichtung 35 antreibt, um den Leitungswickel 50 herzustellen bzw. abzuwickeln.

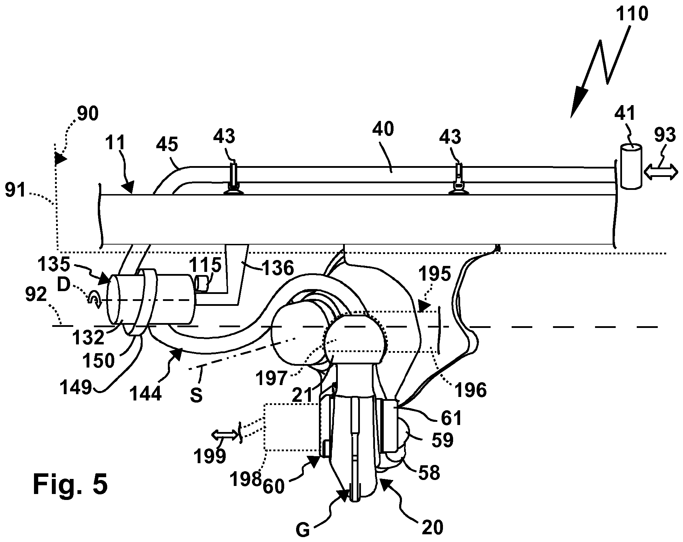

In Figur 5 ist bei der Anhängekupplung 110 ein leicht abgewandeltes Konzept erkennbar. Dort ist beispielsweise eine Wicklungseinrichtung 135 vorgesehen, die ortsfest bezüglich der Trägeranordnung 11 ist. An einem Träger 136 ist beispielsweise ein Wickelkörper 132 drehbar um eine Drehachse D gelagert. Die Drehachse D erstreckt sich beispielsweise parallel oder im Wesentlichen parallel zur Längsachse des Querträgers 12. Mithin ist es möglich, dass der Wickelabschnitt 149 eines Leitungsabschnittes 144, welcher grundsätzlich dem Leitungsabschnitt 44 entspricht, auf den Wickelkörper 132 aufgewickelt und abgewickelt wird, wenn sich der Kupplungsarm 23 bzw. das Kupplungselement 20 zwischen der Gebrauchsstellung G und der Nichtgebrauchstellung N bewegt.

In der Nichtgebrauchstellung N ist beispielsweise eine geringere Leitungslänge des Leitungsabschnittes 144 notwendig als in der Gebrauchsstellung G, so dass beispielsweise ein Leitungswickel 150, der sich um den Außenumfang des Wickelkörpers 132 erstreckt, in der Gebrauchsstellung G teilweise abgewickelt ist, in der Nichtgebrauchstellung N auf den Wickelkörper 132 in größerem Umfang aufgewickelt ist. Bevorzugt ist es, wenn beispielsweise ein Antrieb 115 für den Wickelkörper 132 vorgesehen ist, beispielsweise ein Federantrieb, so dass der Wickelkörper 132 eine Tendenz dazu hat, den Leitungswickel 150 herzustellen, mithin also den Wickelabschnitt 149 aufzuwickeln. Dies ist insbesondere dann notwendig, wenn sich das Kupplungselement 20 von der Gebrauchsstellung G in die Nichtgebrauchstellung N bewegt.

Vorteilhaft kann der Antrieb 115 auch dazu dienen, beispielsweise das Kupplungselement 20 in Richtung der Nichtgebrauchstellung N anzutreibenden oder bei der Verstellung in Richtung der Gebrauchsstellung G abzubremsen.

## Patentansprüche

1. Anhängekupplung mit einer an einem Kraftfahrzeug (90) befestigten oder befestigbaren Trägeranordnung (11), an welcher ein Lager (13) angeordnet ist, wobei an dem Lager (13) ein Kupplungselement (20), insbesondere ein Kupplungsarm (23), anhand einer Verstellbewegung zwischen einer zum Ankuppeln eines Anhängers (95) oder Lastenträgers (195) an das Kupplungselement (20) geeigneten Gebrauchsstellung (G), in welcher das Kupplungselement (20) im am Kraftfahrzeug (90) montierten Zustand der Anhängekupplung (10) nach hinten vor das Kraftfahrzeug (90) vorsteht, und einer Nichtgebrauchstellung (N) verstellbar ist, in welcher das Kupplungselement (20) vorteilhaft hinter einen Stoßfänger (92) des Kraftfahrzeugs (90) zurück verstellt ist, wobei an dem Kupplungselement (20) eine Anschlussvorrichtung (60) zur Verbindung eines Bordnetzes (99) des Anhängers oder Lastenträgers (195) mit einem Bordnetz (93) des Kraftfahrzeugs (90) angeordnet ist, wobei die Anschlussvorrichtung (60) anhand einer Leitung (40) mit dem Bordnetz (93) des Kraftfahrzeugs (90) verbunden oder verbindbar ist, welche einen flexiblen Leitungsabschnitt (44) aufweist, der an einem ersten Längsendbereich (45) ortsfest bezüglich der Trägeranordnung (11) und an einem zweiten Längsendbereich (46) ortsfest am Kupplungselement (20) festgelegt ist und die Bewegung des Kupplungselements (20) zwischen der Gebrauchsstellung (G) und der Nichtgebrauchstellung (N) mitmacht, **dadurch gekennzeichnet, dass** sie eine Wicklungseinrichtung (35) zum Aufwickeln eines Wickelabschnitts (49) des Leitungsabschnitts (44) auf einen Leitungswickel (50) bei der Verstellung des Kupplungselements (20) zwischen der Gebrauchsstellung (G) und der Nichtgebrauchstellung (N) aufweist.

2. Anhängekupplung nach Anspruch 1, **dadurch gekennzeichnet, dass** die Wicklungseinrichtung (35) an dem Kupplungselement (20) angeordnet ist und/oder mit dem Kupplungselement (20) fest verbunden oder bewegungsgekoppelt ist, sodass die Wicklungseinrichtung (35) bei der Verstellbewegung zwischen der Gebrauchsstellung (G) und der Nichtgebrauchstellung (N) zum Aufwickeln und Abwickeln des Leitungswickels (50) angetrieben, insbesondere drehangetrieben, ist.

3. Anhängekupplung nach Anspruch 1 oder 2, **dadurch gekennzeichnet, dass** die Wicklungseinrichtung (35) einen Wickelkörper (32) zum Aufwickeln des Leitungsabschnitts (44) aufweist, auf den der Leitungsabschnitt (44) zumindest teilweise aufwickelbar ist.

4. Anhängekupplung nach einem der vorhergehenden Ansprüche, **dadurch gekennzeichnet, dass** die Wicklungseinrichtung (35) einen Wickelkörper (32) zum Aufwickeln des Leitungsabschnitts (44) aufweist, der eine die Herstellung des Leitungswickels (50) unterstützende Wickelhilfe bildet.

5. Anhängekupplung nach einem der vorhergehenden Ansprüche, **dadurch gekennzeichnet, dass** der Wickelabschnitt (49) den Leitungswickel (50) zumindest abschnittsweise freistehend ohne Abstützung an einem Wickelkörper (32) oder dem Wickelkörper (32) ausbildet.

6. Anhängekupplung nach einem der Ansprüche 3, 4 oder 5, **dadurch gekennzeichnet, dass** der Wickelkörper (32) eine Trommel aufweist oder durch eine Trommel gebildet ist und/oder dass an dem Wickelkörper (32) in einem Winkelabstand zueinander angeordnete Stützkonturen (33), insbesondere Stützrippen, zum Stützen des Leitungswickels (50) angeordnet sind.

7. Anhängekupplung (10) nach einem der vorhergehenden Ansprüche, **dadurch gekennzeichnet, dass** das Kupplungselement (20) um mindestens eine Schwenkachse (S) zwischen der Gebrauchsstellung (G) und der Nichtgebrauchstellung (N) schwenkbar ist.

8. Anhängekupplung nach Anspruch 7, **dadurch gekennzeichnet, dass** die Wicklungseinrichtung (35), insbesondere der Wickelkörper (32), um die mindestens eine Schwenkachse (S) des Kupplungselements (20) zum Aufwickeln und zum Abwickeln des Leitungswickels (50) drehbar gelagert ist und/oder dass die Wicklungseinrichtung (35), insbesondere der oder ein Wickelkörper (32), an einem an dem Lager (13) schwenkbar gelagerten Schwenklagerabschnitt (24), insbesondere eines Lagerkopfes, des Kupplungselements (20), insbesondere stirnseitig, angeordnet ist oder von dem Schwenklagerabschnitt (24) gebildet ist.

9. Anhängekupplung nach einem der vorhergehenden Ansprüche, **dadurch gekennzeichnet, dass** der zweite Längsendbereich (46) des Leitungsabschnitts (44) bogenförmig mit einem Krümmungssinn entsprechend der Krümmung des Leitungswickels (50) in einem Übergangsbereich zum Kupplungselement (20) am Kupplungselement (20) festgelegt ist und/oder dass eine Befestigung des Leitungsabschnitts (44) am Kupplungselement (20) eine Richtung des herzustellenden Leitungswickels (50) vorgibt und/oder dass der zweite Längsendbereich (46) an einem Befestigungsort oder an mindestens zwei Befestigungsorten, die einen Längsabstand und/oder Winkelabstand zueinander aufweisen, an dem Kupplungselement (20) und/oder einem oder dem den Leitungswickel (50) zumindest abschnittsweise stützenden Wickelkörper (32) ortsfest festgelegt ist.

10. Anhängekupplung nach einem der vorhergehenden Ansprüche, **dadurch gekennzeichnet, dass** die Leitung (40) zwischen dem zweiten Längsendbereich (46) des aufwickelbaren Leitungsabschnitts (44) und der Anschlussvorrichtung (60) ortsfest an dem Kupplungselement (20) festgelegt ist und/oder dass die Leitung (40), insbesondere zwischen dem zweiten Längsendbereich (46) des aufwickelbaren Leitungsabschnitts (44) und der Anschlussvorrichtung (60), an dem Kupplungselement (20) eng anliegend verläuft.

11. Anhängekupplung nach einem der vorhergehenden Ansprüche, **dadurch gekennzeichnet, dass** die Leitung (40), insbesondere zwischen dem zweiten Längsendbereich (46) des aufwickelbaren Leitungsabschnitts (44) und der Anschlussvorrichtung (60), an oder in einem Aufnahmekanal des Kupplungselements (20) angeordnet ist und/oder dass der Leitungsabschnitt (44) zwischen dem Leitungswickel (50) und der Trägeranordnung (11) oder dem Kupplungselement (20) in der Gebrauchsstellung (G) und der Nichtgebrauchstellung (N) im Wesentlichen dieselbe Längslänge und/oder denselben geometrischen Verlauf und/oder eine Schleifenform aufweist und/oder dass der Leitungswickel (50) seine aufgewickelte Position ohne Krafteinwirkung oder mit einer Krafteinwirkung beibehält, die geringer als eine zum Aufwickeln des Leitungswickels (50) ist.

12. Anhängekupplung nach einem der vorhergehenden Ansprüche, **dadurch gekennzeichnet, dass** die Wicklungseinrichtung (35) mindestens einen an dem Leitungsabschnitt (44) angeordneten und sich entlang des Leitungsabschnitts (44) erstreckenden Formkörper (70) aufweist, welcher den Leitungsabschnitt (44) in einen den Leitungswickel (50) ausbildenden Wickelzustand oder in einen den Leitungsabschnitt (44) in einen von dem Leitungswickel (50) abgewickelten und den Leitungsabschnitt (44) streckenden Abwickelzustand beaufschlagt, wobei vorteilhaft vorgesehen ist, dass der Formkörper (70) einen Einzelleiter des Leitungsabschnitts (44) umhüllenden Mantel und/oder ein Federstahlelement und/oder eine Wölbung aufweist, die quer zur Längserstreckung des Leitungsabschnitts (44) verläuft und ihren Krümmungsradius beim Strecken oder Aufwickeln des Leitungsabschnitts (44) verändert.

13. Anhängekupplung nach einem der vorhergehenden Ansprüche, **dadurch gekennzeichnet, dass** die Wicklungseinrichtung (35) im Sinne eines Aufwickelns und/oder Abwickelns des Leitungsabschnitts (44) durch einen Antrieb (15), insbesondere einen motorischen Antrieb oder einen Federantrieb (115) oder einen Antrieb zum Antreiben des Kupplungselements (20) zwischen der Gebrauchsstellung (G) und der Nichtgebrauchstellung (N), angetrieben ist.

14. Anhängekupplung nach einem der vorhergehenden Ansprüche, **dadurch gekennzeichnet, dass** der Leitungswickel (50) im aufgewickelten Zustand mindestens eine dreiviertel Wicklung, insbesondere mindestens eine ganze Wicklung, umfasst und/oder dass im aufgewickelten Zustand des Leitungsabschnitts (44) mindestens zwei einen Längsabstand zueinander aufweisende Teilabschnitte des Leitungsabschnitts (44) sich kreuzen und/oder dass im aufgewickelten Zustand des Leitungsabschnitts (44) mindestens zwei einen Längsabstand zueinander aufweisende Teilabschnitte des Leitungsabschnitts (44) nebeneinander angeordnet sind und/oder dass im aufgewickelten Zustand des Leitungsabschnitts (44) mindestens zwei einen Längsabstand zueinander aufweisende Teilabschnitte des Leitungsabschnitts (44) aneinander anliegen.

15. Anhängekupplung nach einem der vorhergehenden Ansprüche, **dadurch gekennzeichnet, dass** die Wicklungseinrichtung (35) und/oder der Leitungswickel (50) als eine das Kupplungselement (20) bremsende Bremse oder als ein das Kupplungselement (20) antreibender Antrieb bei der Verstellung des Kupplungselements (20) zwischen der Gebrauchsstellung (G) und der Nichtgebrauchstellung (N) wirkt.

## Claims

1. Trailer coupling with a support assembly (11) which is or may be attached to a motor vehicle (90) and on which is mounted a bearing (13) wherein, on the bearing (13), there is mounted a coupling element (20), in particular a coupling arm (23), which is adjustable with the aid of an adjustment movement between a position of use (G) suitable for coupling a trailer (95) or load carrier (195) to the coupling element (20) and in which the coupling element (20), with the trailer coupling (10) fitted to the motor vehicle (90), protrudes to the rear beyond the motor vehicle (90), and an inoperative position (N) in which the coupling element (20) is advantageously recessed behind a bumper (92) of the motor vehicle (90), wherein there is provided on the coupling element (20) a connection device (60) for connecting an electrical system (99) of the trailer or load carrier (195) to an electrical system (93) of the motor vehicle (90), wherein the connection device (60) is or may be connected to the electrical system (93) of the motor vehicle (90) with the aid of a cable (40) which has a flexible cable section (44) which is fixed at a first longitudinal end section (45) immovably with respect to the support assembly (11) and at a second longitudinal end section (46) immovably to the coupling element (20), and accompanies the movement of the coupling element (20) between the position of use (G) and the inoperative position (N), **characterised in that** it has a winding device (35) for winding up a winding section (49) of the cable section (44) on to a cable winding (50) during the adjustment of the coupling element (20) between the position of use (G) and the inoperative position (N).

2. Trailer coupling according to claim 1, **characterised in that** the winding device (35) is located on the coupling element (20) and/or is connected or movement-coupled to the coupling element (20), so that the winding device (35) is driven, in particular rotatably driven, to wind up and unwind the cable winding(50) during the adjustment movement between the position of use (G) and the inoperative position (N).

3. Trailer coupling according to claim 1 or 2, **characterised in that** the winding device (35) has a winding body (32) for winding up the cable section (44), on to which the cable section (44) may be at least partly wound.

4. Trailer coupling according to any of the preceding claims, **characterised in that** the winding device (35) has a winding body (32) for winding up the cable section (44) and which forms a winding aid supporting the creation of the cable winding (50).

5. Trailer coupling according to any of the preceding claims, **characterised in that** the winding section (49) forms the cable winding (50), at least free-standing in sections, without support on a winding body (32) or the winding body (32).

6. Trailer coupling according to any of claims 3, 4 or 5, **characterised in that** the winding body (32) has a drum or is formed by a drum and/or that on the winding body (32) there are provided support contours (33), in particular support ribs, arranged at an angular distance from one another, to support the cable winding (50).

7. Trailer coupling (10) according to any of the preceding claims, **characterised in that** the coupling element (20) is pivotable around at least one swivel axis (S) between the position of use (G) and the inoperative position (N).

8. Trailer coupling according to claim 7, **characterised in that** the winding device (35), in particular the winding body (32), is rotatably mounted around the swivel axis or axes (S) of the coupling element (20) for winding up and unwinding of the cable winding (50) and/or that the winding device (35), in particular a winding body (32) or the winding body (32), is provided on a swivel bearing section (24), pivotably mounted on the bearing (13), in particular a bearing head, of the coupling element (20), in particular at the end face, or is formed by the swivel bearing section (24).

9. Trailer coupling according to any of the preceding claims, **characterised in that** the second longitudinal end section (46) of the cable section (44) is fixed to the coupling element (20) in a curve with a direction of curvature corresponding to the curvature of the cable winding (50) in a transition zone to the coupling element (20), and/or that a fixing of the cable section (44) to the coupling element (20) presets a direction of the cable winding (50) to be created, and/or that the second longitudinal end section (46), at a fixing point or at least two fixing points at an axial distance or angular distance from one another, is fixed immovably to the coupling element (20) and/or to one or the winding body (32) supporting the cable winding (50) at least in parts.

10. Trailer coupling according to any of the preceding claims, **characterised in that** the cable (40) is fixed immovably to the coupling element (20) between the second longitudinal end section (46) of the cable section (44) which may be wound and the connection device (60), and/or that the cable (40) runs in contact with the coupling element (20), in particular between the second longitudinal end section (46) of the cable section (44) and the connection device (60).

11. Trailer coupling according to any of the preceding claims, **characterised in that** the cable (40), in particular between the second longitudinal end section (46) of the cable section (44) which may be wound and the connection device (60), is arranged on or in a locating channel of the coupling element (20), and/or that the cable section (44) between the cable winding (50) and the support assembly (11) or the coupling element (20) in the position of use (G) and the inoperative position (N) has substantially the same axial length and/or the same geometrical course and/or a loop shape, and/or that the cable winding (50) retains its woundup position without application of force or with an application of force which is less than that for winding up the cable winding (50).

12. Trailer coupling according to any of the preceding claims, **characterised in that** the winding device (35) has at least one moulded body (70) arranged on the cable section (44) and extending along the cable section (44), which pressure-loads the cable section (44) into a wound state forming the cable winding (50) or into an unwound state with the cable section (44) unwound from the cable winding (50) and stretched, wherein it is advantageously provided that the moulded body (70) has a sheathing enveloping individual cables of the cable section (44) and/or a spring steel element and/or a curvature which runs transversely to the longitudinal extent of the cable section (44) and changes its curve radius on stretching or winding up of the cable section (44).

13. Trailer coupling according to any of the preceding claims, **characterised in that** the winding device (35) is driven for the purpose of winding up and/or unwinding the cable section (44) by a drive (15), in particular a motor drive or a spring drive (115) or a drive for driving the coupling element (20) between the position of use (G) and the inoperative position (N).

14. Trailer coupling according to any of the preceding claims, **characterised in that** the cable winding (50) in the wound state comprises at least one three-quarter winding, in particular at least a whole winding, and/or that in the wound state of the cable section (44) at least two portions of the cable section (44) with longitudinal clearance from one another intersect, and/or that in the wound state of the cable section (44) at least two portions of the cable section (44) with longitudinal clearance from one another are arranged adjacent to one another, and/or that in the wound state of the cable section (44) at least two portions of the cable section (44) with longitudinal clearance from one another are in contact with one another.

15. Trailer coupling according to any of the preceding claims, **characterised in that** the winding device (35) and/or the cable winding (50) act as a brake which brakes the coupling element (20) or as a drive which drives the coupling element (20) in the adjustment of the coupling element (20) between the position of use (G) and the inoperative position (N).

## Revendications

1. Attelage avec un agencement porteur (11) fixé ou pouvant être fixé à un véhicule automobile (90), au niveau duquel un palier (13) est agencé, dans lequel au niveau du palier (13) un élément d'attelage (20), en particulier un bras d'attelage (23), est réglable au moyen d'un mouvement de réglage entre une position d'utilisation (G) appropriée à l'attelage d'une remorque (95) ou d'un support de charge (195) à l'élément d'attelage (20), dans laquelle l'élément d'attelage (20) dépasse à l'état monté, au niveau du véhicule automobile (90), de l'attelage (10) vers l'arrière du véhicule automobile (90), et une position de non-utilisation (N), dans laquelle l'élément d'attelage (20) est réglé en retour avantageusement derrière un pare-chocs (92) du véhicule automobile (90), dans lequel un dispositif de raccordement (60) est agencé au niveau de l'élément d'attelage (20) pour la liaison d'un réseau de bord (99) de la remorque ou du support de charge (195) avec un réseau de bord (93) du véhicule automobile (90), dans lequel le dispositif de raccordement (60) est relié ou peut être relié au moyen d'un câble (40) au réseau de bord (93) du véhicule automobile (90), qui présente une section de câble flexible (44) qui est attachée à une première zone d'extrémité longitudinale (45) fixement par rapport à l'agencement porteur (11) et à une seconde zone d'extrémité longitudinale (46) fixement à l'élément d'attelage (20) et participe au mouvement de l'élément d'attelage (20) entre la position d'utilisation (G) et la position de non-utilisation (N), **caractérisé en ce qu'**il présente un dispositif d'enroulement (35) pour l'enroulement d'une section à enrouler (49) de la section de câble (44) sur un enroulement de câble (50) lors du réglage de l'élément d'attelage (20) entre la position d'utilisation (G) et la position de non-utilisation (N).

2. Attelage selon la revendication 1, **caractérisé en ce que** le dispositif d'enroulement (35) est agencé au niveau de l'élément d'attelage (20) et/ou est relié à demeure ou couplé en mouvement à l'élément d'attelage (20) de sorte que le dispositif d'enroulement (35) soit entraîné, en particulier entraîné en rotation, lors du mouvement de réglage entre la position d'utilisation (G) et la position de non-utilisation (N) pour l'enroulement et le déroulement de l'enroulement de câble (50).

3. Attelage selon la revendication 1 ou 2, **caractérisé en ce que** le dispositif d'enroulement (35) présente un corps d'enroulement (32) pour l'enroulement de la section de câble (44) sur lequel la section de câble (44) peut être enroulée au moins partiellement.

4. Attelage selon l'une des revendications précédentes, **caractérisé en ce que** le dispositif d'enroulement (35) présente un corps d'enroulement (32) pour l'enroulement de la section de câble (44) qui forme une aide à l'enroulement soutenant la fabrication de l'enroulement de câble (50).

5. Attelage selon l'une des revendications précédentes, **caractérisé en ce que** la section à enrouler (49) réalise l'enroulement de câble (50) détaché au moins par sections sans appui contre un corps d'enroulement (32) ou le corps d'enroulement (32).

6. Attelage selon l'une des revendications 3, 4 ou 5, **caractérisé en ce que** le corps d'enroulement (32) présente un tambour ou est formé par un tambour et/ou que des contours d'appui (33), en particulier des nervures d'appui, agencés dans une distance angulaire les uns aux autres sont agencés au niveau du corps d'enroulement (32) pour l'appui de l'enroulement de câble (50).

7. Attelage (10) selon l'une des revendications précédentes, **caractérisé en ce que** l'élément d'attelage (20) peut être pivoté autour d'au moins un axe de pivotement (S) entre la position d'utilisation (G) et la position de non-utilisation (N).

8. Attelage selon la revendication 7, **caractérisé en ce que** le dispositif d'enroulement (35), en particulier le corps d'enroulement (32), est logé de manière à pouvoir tourner autour de l'au moins un axe de pivotement (S) de l'élément d'attelage (20) pour l'enroulement et le déroulement de l'enroulement de câble (50) et/ou que le dispositif d'enroulement (35), en particulier le ou un corps d'enroulement (32), est agencé au niveau d'une section de palier de pivotement (24) logée de manière pivotante au niveau du palier (13), en particulier d'une tête de palier, de l'élément d'attelage (20), en particulier côté avant ou est formé par la section de palier de pivotement (24).

9. Attelage selon l'une des revendications précédentes, **caractérisé en ce que** la seconde zone d'extrémité longitudinale (46) de la section de câble (44) est fixée à l'élément d'attelage (20) en forme d'arc avec un sens de courbure correspondant à la courbure de l'enroulement de câble (50) dans une zone de transition à l'élément d'attelage (20) et/ou qu'une fixation de la section de câble (44) à l'élément d'attelage (20) prédéfinit une direction de l'enroulement de câble (50) à fabriquer et/ou que la seconde zone d'extrémité longitudinale (46) est attachée fixement en un lieu de fixation ou en au moins deux lieux de fixation qui présentent une distance longitudinale et/ou distance angulaire l'un par rapport à l'autre, à l'élément d'attelage (20) et/ou à un ou au corps d'enroulement (32) appuyant au moins par section l'enroulement de câble (50).

10. Attelage selon l'une des revendications précédentes, **caractérisé en ce que** le câble (40) est attaché fixement à l'élément d'attelage (20) entre la seconde zone d'extrémité longitudinale (46) de la section de câble (44) enroulable et le dispositif de raccordement (60) et/ou que le câble (40) s'étend reposant étroitement en particulier entre la seconde zone d'extrémité longitudinale (46) de la section de câble (44) enroulable et le dispositif de raccordement (60), contre l'élément d'attelage (20).

11. Attelage selon l'une des revendications précédentes, **caractérisé en ce que** le câble (40) est agencé en particulier entre la seconde zone d'extrémité longitudinale (46) de la section de câble (44) enroulable et le dispositif de raccordement (60) au niveau ou dans un canal de réception de l'élément d'attelage (20) et/ou que la section de câble (44) présente entre l'enroulement de câble (50) et l'agencement porteur (11) ou l'élément d'attelage (20) dans la position d'utilisation (G) et la position de non-utilisation (N) sensiblement la même longueur longitudinale et/ou la même étendue géométrique et/ou une forme de boucle et/ou que l'enroulement de câble (50) maintient sa position enroulée sans effet de force ou avec un effet de force qui est moindre qu'une position pour l'enroulement de l'enroulement de câble (50).

12. Attelage selon l'une des revendications précédentes, **caractérisé en ce que** le dispositif d'enroulement (35) présente au moins un corps moulé (70) agencé au niveau de la section de câble (44) et s'étendant le long de la section de câble (44) qui sollicite la section de câble (44) dans un état d'enroulement réalisant l'enroulement de câble (50) ou dans une de la section de câble (44) dans un état de déroulement déroulé de l'enroulement de câble (50) et étirant la section de câble (44), dans lequel il est avantageusement prévu que le corps moulé (70) présente une enveloppe entourant des conducteurs individuels de la section de câble (44) et/ou un élément d'acier à ressort et/ou une courbure qui s'étend transversalement à l'étendue longitudinale de la section de câble (44) et modifie son rayon de courbure lors de l'étirement ou l'enroulement de la section de câble (44).

13. Attelage selon l'une des revendications précédentes, **caractérisé en ce que** le dispositif d'enroulement (35) est entraîné au sens d'un enroulement et/ou d'un déroulement de la section de câble (44) par un entraînement (15), en particulier un entraînement motorisé ou un entraînement de ressort (115) ou un entraînement pour l'entraînement de l'élément d'attelage (20) entre la position d'utilisation (G) et la position de non-utilisation (N).

14. Attelage selon l'une des revendications précédentes, **caractérisé en ce que** l'enroulement de câble (50) comporte à l'état enroulé au moins un enroulement de trois-quarts, en particulier au moins un enroulement entier et/ou qu'à l'état enroulé de la section de câble (44) au moins deux sections partielles présentant une distance longitudinale entre elles de la section de câble (44) se croisent et/ou qu'à l'état enroulé de la section de câble (44) au moins deux sections partielles présentant une distance longitudinale l'une à l'autre de la section de câble (44) sont agencées l'une à côté de l'autre et/ou qu'à l'état enroulé de la section de câble (44) au moins deux sections partielles présentant une distance longitudinale l'une à l'autre de la section de câble (44) reposent l'une contre l'autre.

15. Attelage selon l'une des revendications précédentes, **caractérisé en ce que** le dispositif d'enroulement (35) et/ou l'enroulement de câble (50) agit en tant que frein freinant l'élément d'attelage (20) ou en tant qu'entraînement entraînant l'élément d'attelage (20) lors du réglage de l'élément d'attelage (20) entre la position d'utilisation (G) et la position de non-utilisation (N).
